# EUROPEAN PATENT APPLICATION

(11) **EP 4 564 928 A1**
(43) Date of publication of application: **04.06.2025**
(21) Application number: 23845605.7
(22) Date of filing: 26.07.2023
(51) Int. Cl.: H04W 48/18

(54) **NETWORK SELECTION METHOD AND TERMINAL**

(30) Priority: 29.07.2022 CN 202210911245
(71) Applicant: Vivo Mobile Communication Co., Ltd., Dongguan, Guangdong 523863 (CN)
(72) Inventor: ZHANG, Pengfei, Dongguan, Guangdong 523863 (CN)
(74) Representative: Murgitroyd & Company
(86) International application number: PCT/CN2023/109383
(87) International publication number: WO 2024/022397

(57) **Abstract**

This application discloses a network selection method and a terminal, and pertains to the field of communication technologies. The network selection method in an embodiment of this application includes: selecting, by a terminal, a target network as a to-be-accessed network based on a network selection mode, where the target network includes any one of the following: a hosting non-public network NPN, a normal NPN, or a public land mobile network PLMN.

## Description

### CROSS-REFERENCE TO RELATED APPLICATION

This application claims priority to Chinese Patent Application No. 202210911245.4, filed in China on July 29, 2022, which is incorporated herein by reference in its entirety.

### TECHNICAL FIELD

This application pertains to the field of communication technologies, and specifically relates to a network selection method and a terminal.

### BACKGROUND

To support needs of vertical industries, a concept of a non-public network (Non-Public Network, NPN) is currently introduced, to provide a user with a "private" network independent of a public network, for example, a stand-alone NPN (Stand-alone Non-Public Network, SNPN), or a non-stand-alone NPN (Public Network Integrated Non-Public Network, PNI-NPN).

A plurality of types of networks may be available at a same place at a same moment, for example, an SNPN available at a specific time and place (hosting SNPN for short), an SNPN without specific time and place restrictions (normal SNPN for short), or a public land mobile network (Public Land Mobile Network, PLMN). Therefore, for a person skilled in the art, how to select a network in a case that a plurality of types of networks are available is a technical problem that needs to be resolved urgently.

### SUMMARY

Embodiments of this application provide a network selection method and a terminal, which can resolve a problem about how to select a network in a case of a plurality of types of networks.

According to a first aspect, a network selection method is provided, including:
selecting, by a terminal, a target network as a to-be-accessed network based on a network selection mode, where the target network includes any one of the following: a hosting non-public network NPN, a normal NPN, or a public land mobile network PLMN.

According to a second aspect, a network selection apparatus is provided, including:
a processing module, configured to select a target network as a to-be-accessed network based on a network selection mode, where the target network includes any one of the following: a hosting non-public network NPN, a normal NPN, or a public land mobile network PLMN.

According to a third aspect, a terminal is provided, where the terminal includes a processor and a memory, where the memory stores a program or instructions executable on the processor, and when the program or the instructions are executed by the processor, the steps of the method according to the first aspect are implemented.

According to a fourth aspect, a terminal is provided, including a processor and a communication interface, where the processor is used by a terminal to select a target network as a to-be-accessed network based on a network selection mode, where the target network includes any one of the following: a hosting non-public network NPN, a normal NPN, or a public land mobile network PLMN.

According to a fifth aspect, a communication system is provided, including a terminal and a network side device, where the terminal may be configured to perform the steps of the network selection method according to the first aspect.

According to a sixth aspect, a readable storage medium is provided, where a program or instructions are stored in the readable storage medium, and the program or the instructions are executed by a processor to implement the steps of the method according to the first aspect.

According to a seventh aspect, a chip is provided, where the chip includes a processor and a communication interface, the communication interface is coupled to the processor, and the processor is configured to run a program or instructions to implement the method according to the first aspect.

According to an eighth aspect, a computer program/a program product is provided, where the computer program/the program product is stored in a storage medium, and the computer program/the program product is executed by at least one processor to implement the steps of the network selection method according to the first aspect.

In the embodiments of this application, in a case that there are a plurality of types of networks, the terminal can select the target network as the to-be-accessed network based on the network selection mode, where the target network includes any one of the following: the hosting non-public network NPN, the normal NPN, or the public land mobile network PLMN, which can effectively perform network selection and improve network selection efficiency, and has relatively low complexity.

### BRIEF DESCRIPTION OF DRAWINGS

FIG. 1 is a diagram of a structure of a wireless communication system to which an embodiment of this application can be applied;
FIG. 2 is a schematic flowchart of a network selection method according to an embodiment of this application;
FIG. 3 is a schematic flowchart of interaction of a network selection method according to an embodiment of this application;
FIG. 4 is a schematic diagram of a structure of a network selection apparatus according to an embodiment of this application;
FIG. 5 is a schematic diagram of a structure of a communication device according to an embodiment of this application;
FIG. 6 is a schematic diagram of a hardware structure of a terminal according to an embodiment of this application; and
FIG. 7 is a schematic diagram of a hardware structure of a network side device according to an embodiment of this application.

### DESCRIPTION OF EMBODIMENTS

The technical solutions of the embodiments of this application are clearly described below with reference to the accompanying drawings in the embodiments of this application. Clearly, the described embodiments are some rather than all of the embodiments of this application. All other embodiments obtained by a person of ordinary skill in the art based on embodiments of this application shall fall within the protection scope of this application.

It should be noted that the terms "first", "second", and the like in the specification and claims of this application are intended to distinguish between similar objects but do not necessarily indicate a specific order or sequence. It should be understood that the terms used in such a way are interchangeable in proper circumstances, so that the embodiments of this application can be implemented in a sequence other than those shown or described herein. In addition, objects distinguished by "first" and "second" are usually of a same type, and a quantity of the objects is not limited. For example, the first object may be one or more. In addition, in the specification and claims, "and/or" represents at least one of connected objects, and the character "/" usually represents an "or" relationship between associated objects.

It should be noted that the technology described in the embodiments of this application is not limited to a long term evolution (Long Term Evolution, LTE)/an LTE-Advanced (LTE-Advanced, LTE-A) system, and may be further applied to another wireless communication system such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of this application are often used interchangeably. The described technology may be used in the system and radio technology mentioned above, or may be used in another system and radio technology. The following descriptions describe a new radio (New Radio, NR) system for an example purpose, and NR terms are used in most of the following descriptions. However, these technologies may also be applied to applications other than NR system applications, such as a 6^{th} generation (6^{th} Generation, 6G) communication system.

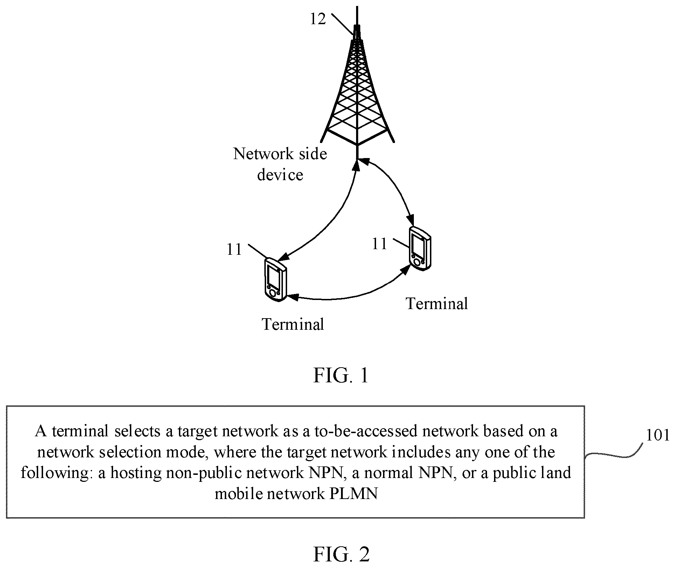

FIG. 1 is a block diagram of a wireless communication system to which an embodiment of this application can be applied. The wireless communication system includes a terminal 11 and a network side device 12. The terminal 11 may be a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart household (a household device with a wireless communication function, such as a refrigerator, a television, a washing machine, or a furniture), a game machine, a personal computer (personal computer, PC), a teller machine, a self-service machine, or another terminal side device. The wearable device includes a smartwatch, a smart band, a smart headset, smart glasses, smart jewelry (a smart wristlet, a smart bracelet, a smart ring, a smart necklace, a smart anklet, a smart leglet, or the like), a smart wristband, a smart dress, or the like. It should be noted that a specific type of the terminal 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP), or another appropriate term in the field. Provided that same technical effects are achieved, the base station is not limited to a specific technical vocabulary. It should be noted that in the embodiments of this application, only a base station in the NR system is used as an example for description, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, L-NEF), a binding support function (Binding Support Function, BSF), an application function (Application Function, AF), and the like. It should be noted that in the embodiments of this application, only a core network device in the NR system is used as an example for description, and a specific type of the core network device is not limited.

With reference to the accompanying drawings, the following describes in detail a network selection method provided in embodiments of this application by using some embodiments and application scenarios thereof.

FIG. 2 is a schematic flowchart of a network selection method according to an embodiment of this application. As shown in FIG. 2, the method provided in this embodiment includes the following steps.

Step 101: A terminal selects a target network as a to-be-accessed network based on a network selection mode, where the target network includes any one of the following: a hosting non-public network NPN, a normal NPN, or a public land mobile network PLMN.

Specifically, one or more types of networks may be available at a same place at a same moment. For example, a hosting network may be deployed at a specific time and place, and the terminal may access the hosting network at the time and place, to obtain a local service. The hosting NPN may be a hosting SNPN or a hosting PNI-NPN, namely, an NPN available at a specific time and place.

The terminal may select the to-be-accessed target network based on the network selection mode, for example, including any one of the following: the hosting NPN, the normal NPN, or the PLMN. The normal NPN is a non-public network without specific time and/or place restrictions.

The network selection mode may be, for example, configured by a network side device, predefined in a protocol, or determined by the terminal.

For example, the network selection mode may specify which networks are preferentially selected or only which networks can be selected, or other information.

According to the method in this embodiment, in a case that there are a plurality of types of networks, the terminal can select the target network as the to-be-accessed network based on the network selection mode, where the target network includes any one of the following: the hosting NPN, the normal NPN, or the public land mobile network PLMN, which can effectively perform network selection and improve network selection efficiency, and has relatively low complexity.

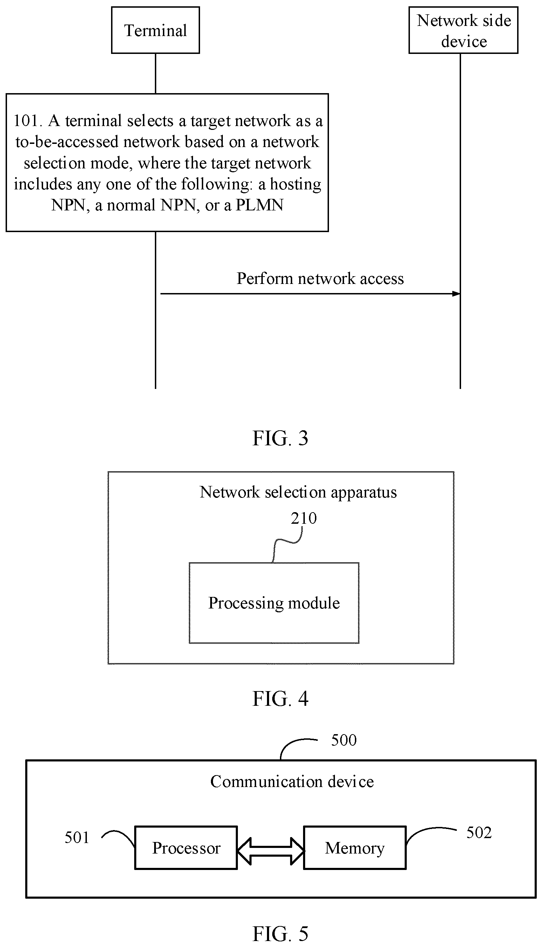

Optionally, as shown in FIG. 3, after step 101, the terminal may initiate an access request to a network side device of the to-be-accessed network to perform network access.

Optionally, in a case that the hosting NPN includes the hosting SNPN or the normal NPN includes a normal SNPN, step 101 may be implemented in the following several manners.

Manner 1:
in a case that the network selection mode is not an SNPN access mode, the terminal uses the PLMN as the to-be-accessed network; or
in a case that the network selection mode is an SNPN access mode, the terminal uses the hosting SNPN or the normal SNPN as the to-be-accessed network.

Specifically, when the terminal is in the non-SNPN access mode, the terminal selects the PLMN as the to-be-accessed network. Optionally, in this mode, only the PLMN can be selected regardless of whether the PLMN is available.

When the terminal is in the SNPN access mode, the terminal may select the hosting SNPN or the normal SNPN as the to-be-accessed network. Optionally, in this mode, only the hosting SNPN or the normal SNPN is selected regardless of whether the hosting SNPN or the normal SNPN is available.

Optionally, in a case that a network validity condition of the hosting SNPN is met, the terminal preferentially uses the hosting SNPN as the to-be-accessed network; or
in a case that the network validity condition of the hosting SNPN is not met, the terminal preferentially uses the normal SNPN as the to-be-accessed network, or uses only the normal SNPN as the to-be-accessed network.

Optionally, that the network validity condition of the hosting SNPN is met includes: a current time is within a time range in which the hosting SNPN is valid, and/or a current location of the terminal is within a location range in which the hosting SNPN is valid.

Specifically, in the case that the network validity condition of the hosting SNPN is met, for example, a current time of selecting a network by the terminal is within the time range in which the hosting SNPN is valid, and/or the current location of the terminal is within the location range in which the hosting SNPN is valid, the terminal may preferentially use the hosting SNPN as the to-be-accessed network.

In the case that the network validity condition of the hosting SNPN is not met, the terminal preferentially uses the normal SNPN as the to-be-accessed network, or uses only the normal SNPN as the to-be-accessed network, that is, selects only the SNPN regardless of whether the normal SNPN is available.

Optionally, the network validity condition may be configured in the terminal based on subscription information of the terminal, or may be sent by the network side device to the terminal.

In the foregoing implementation, when the hosting SNPN or the normal SNPN may be selected, the hosting SNPN can be preferentially selected, which has relatively low implementation complexity.

Manner 2:
in a case that the network selection mode is any mode, if the hosting SNPN is available, the terminal uses the hosting SNPN as the to-be-accessed network.

Specifically, based on timeliness and place particularities of the hosting SNPN, the network selection mode may be not considered for the hosting SNPN, that is, if the hosting SNPN is available, the terminal accesses the hosting SNPN regardless of whether in an SNPN access mode or not an SNPN access mode.

In the foregoing implementation, network selection can be performed more quickly without frequent switching of the network selection mode, and network selection efficiency of the terminal is relatively high.

Optionally, in a case that the network selection mode is the SNPN access mode and a network validity condition of the hosting SNPN is met, the terminal preferentially uses the hosting SNPN as the to-be-accessed network.

In a case that the network selection mode is the non-SNPN access mode and the network validity condition of the hosting SNPN is met, the terminal preferentially uses the hosting SNPN as the to-be-accessed network.

Specifically, regardless of whether in the SNPN access mode or the non-SNPN access mode, when the network validity condition of the hosting SNPN is met, the hosting SNPN is preferentially selected.

Optionally, the method further includes:
in a case that the network selection mode is an SNPN access mode and a network validity condition of the hosting SNPN is not met, the terminal preferentially uses the normal SNPN as the to-be-accessed network, or uses only the normal SNPN as the to-be-accessed network; or
in a case that the network selection mode is not an SNPN access mode and the network validity condition of the hosting SNPN is not met, the terminal preferentially uses the normal SNPN as the to-be-accessed network, or uses only the normal SNPN as the to-be-accessed network.

Specifically, regardless of whether in the SNPN access mode or the non-SNPN access mode, when the network validity condition of the hosting SNPN is not met, the normal SNPN is preferentially selected or only the normal SNPN is selected (for example, regardless of whether the normal SNPN is available, only the normal SNPN can be selected).

Further, in a case that the network validity condition of the hosting SNPN is met, the terminal preferentially enables the SNPN access mode. That is, the hosting SNPN or the normal SNPN can be preferentially selected.

Manner 3:
in a case that a network validity condition of the hosting SNPN is met, the terminal enables a target network selection mode; and
the terminal uses the hosting SNPN as the to-be-accessed network; or
the terminal uses the hosting SNPN or the normal SNPN as the to-be-accessed network; or
the terminal uses any one of the hosting SNPN, the normal SNPN, or the PLMN as the to-be-accessed network.

Optionally, that the terminal uses the hosting SNPN or the normal SNPN as the to-be-accessed network includes:
the terminal preferentially uses the hosting SNPN as the to-be-accessed network.

That the terminal uses any one of the hosting SNPN, the normal SNPN, or the PLMN as the to-be-accessed network includes:
the terminal preferentially uses the hosting SNPN as the to-be-accessed network.

Specifically, when the network validity condition of the hosting SNPN is met, a new target network selection mode may be enabled, and access to only the hosting SNPN is allowed. Alternatively, access to only the hosting SNPN or the normal SNPN is allowed, for example, the hosting SNPN may be preferentially selected. Alternatively, access to the hosting SNPN, the normal SNPN, or the PLMN is allowed, for example, the hosting SNPN may be preferentially selected.

In the foregoing implementation, in the case that the network validity condition of the hosting SNPN is met, the terminal enables the target network selection mode. In this target network selection mode, the hosting SNPN can be preferentially selected, which can assist the terminal to effectively perform network selection and improve network selection efficiency, and has relatively low complexity.

The network selection method provided in this embodiment of this application may be performed by a network selection apparatus. In an embodiment of this application, that the network selection apparatus performs the network selection method is used as an example to describe the network selection apparatus provided in this embodiment of this application.

FIG. 4 is a schematic diagram of a structure of a network selection apparatus according to an embodiment of this application. As shown in FIG. 4, the network selection apparatus provided in this embodiment includes:
a processing module 210, configured to select a target network as a to-be-accessed network based on a network selection mode, where the target network includes any one of the following: a hosting non-public network NPN, a normal NPN, or a public land mobile network PLMN.

Optionally, in a case that the hosting NPN includes a hosting SNPN or the normal NPN includes a normal SNPN, the processing module 210 is specifically configured to:
in a case that the network selection mode is not an SNPN access mode, use the PLMN as the to-be-accessed network; or
in a case that the network selection mode is an SNPN access mode, use the hosting SNPN or the normal SNPN as the to-be-accessed network.

Optionally, the processing module 210 is specifically configured to:
in a case that a network validity condition of the hosting SNPN is met, preferentially use the hosting SNPN as the to-be-accessed network; or
in a case that the network validity condition of the hosting SNPN is not met, preferentially use the normal SNPN as the to-be-accessed network, or use only the normal SNPN as the to-be-accessed network.

Optionally, in a case that the hosting NPN includes a hosting SNPN, the processing module 210 is specifically configured to:
in a case that the network selection mode is any mode, if the hosting SNPN is available, use the hosting SNPN as the to-be-accessed network.

Optionally, the processing module 210 is specifically configured to:
in a case that the network selection mode is an SNPN access mode and a network validity condition of the hosting SNPN is met, preferentially use the hosting SNPN as the to-be-accessed network; or
in a case that the network selection mode is not an SNPN access mode and the network validity condition of the hosting SNPN is met, preferentially use the hosting SNPN as the to-be-accessed network.

Optionally, in a case that the normal NPN includes a normal SNPN, the processing module 210 is further configured to:
in a case that the network selection mode is an SNPN access mode and a network validity condition of the hosting SNPN is not met, preferentially use the normal SNPN as the to-be-accessed network, or use only the normal SNPN as the to-be-accessed network; or
in a case that the network selection mode is not an SNPN access mode and the network validity condition of the hosting SNPN is not met, preferentially use the normal SNPN as the to-be-accessed network, or use only the normal SNPN as the to-be-accessed network.

Optionally, in a case that the hosting NPN includes a hosting SNPN or the normal NPN includes a normal SNPN, the processing module 210 is further configured to:
in a case that a network validity condition of the hosting SNPN is met, enable a target network selection mode.

Optionally, the processing module 210 is specifically configured to perform any one of the following:
using the hosting SNPN as the to-be-accessed network; or
using the hosting SNPN or the normal SNPN as the to-be-accessed network; or
using any one of the hosting SNPN, the normal SNPN, or the PLMN as the to-be-accessed network.

Optionally, the processing module 210 is specifically configured to:
preferentially use the hosting SNPN as the to-be-accessed network.

Optionally, the processing module 210 is specifically configured to:
in the case that the network validity condition of the hosting SNPN is met, preferentially enable the SNPN access mode.

Optionally, that the network validity condition of the hosting SNPN is met includes: a current time is within a time range in which the hosting SNPN is valid, and/or a current location of the terminal is within a location range in which the hosting SNPN is valid.

The apparatus in this embodiment may be configured to perform the method in any one of the foregoing terminal-side method embodiments. Specific implementation processes and technical effects thereof are the same as those in the terminal-side method embodiments. For details, refer to detailed descriptions in the terminal-side method embodiments. Details are not described herein again.

The network selection apparatus in this embodiment of this application may be an electronic device, for example, an electronic device with an operating system, or may be a component in the electronic device, for example, an integrated circuit or a chip. The electronic device may be a terminal, or may be another device other than the terminal. For example, the terminal may include but is not limited to the foregoing listed type of the terminal 11. The another device may be a server, a network attached storage (Network Attached Storage, NAS), or the like. This is not specifically limited in the embodiments of this application.

The network selection apparatus provided in this embodiment of this application can implement processes implemented in the method embodiments of FIG. 2 and FIG. 3, and achieve same technical effects. To avoid repetition, details are not described herein again.

Optionally, as shown in FIG. 5, an embodiment of this application further provides a communication device 500, including a processor 501 and a memory 502. The memory 502 stores a program or instructions executable on the processor 501. For example, when the communication device 500 is a terminal, and when the program or the instructions are executed by the processor 501, the steps in the foregoing network selection method embodiment are implemented, and same technical effects can be achieved. When the communication device 500 is a network side device, and when the program or the instructions are executed by the processor 501, the steps in the foregoing network selection method embodiment are implemented, and same technical effects can be achieved. To avoid repetition, details are not described herein again.

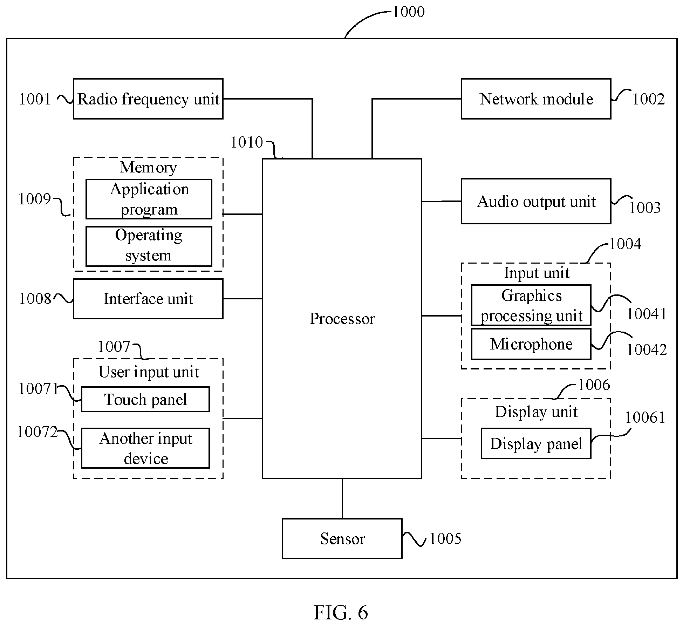

An embodiment of this application further provides a terminal, including a processor and a communication interface. The processor is configured to select a target network as a to-be-accessed network based on a network selection mode, where the target network includes any one of the following: a hosting NPN, a normal NPN, or a public land mobile network PLMN. This terminal embodiment is corresponding to the foregoing terminal-side method embodiment. Each implementation process and each implementation of the foregoing method embodiment may be applicable to this terminal embodiment, and same technical effects can be achieved. Specifically, FIG. 6 is a schematic diagram of a hardware structure of a terminal according to an embodiment of this application.

The terminal 1000 includes but is not limited to at least a part of components of a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

A person skilled in the art may understand that the terminal 1000 may further include a power supply (for example, a battery) that supplies power to each component. The power supply may be logically connected to the processor 1010 by using a power supply management system, to implement functions such as charging management, discharging management, and power consumption management by using the power supply management system. A structure of the terminal shown in FIG. 6 does not constitute a limitation on the terminal. The terminal may include more or fewer components than those shown in the figure, or combine some components, or have different component arrangements. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a function key (for example, a volume control key or an on/off key), a trackball, a mouse, and a joystick. Details are not described herein.

In this embodiment of this application, after receiving downlink data from a network side device, the radio frequency unit 1001 may transmit the downlink data to the processor 1010 for processing. In addition, the radio frequency unit 1001 may send uplink data to the network side device for sending the uplink data. Usually, the radio frequency unit 1001 includes but is not limited to an antenna, at least one amplifier, a transceiver, a coupler, a low-noise amplifier, a duplexer, and the like.

The memory 1009 may be configured to store a software program or instructions and various types of data. The memory 1009 may mainly include a first storage area for storing a program or instructions and a second storage area for storing data. The first storage program or instruction area may store an operating system, an application program or instructions required by at least one function (for example, a sound playback function or an image playback function), and the like. In addition, the memory 1009 may include a volatile memory or a non-volatile memory, or the memory 1009 may include both a volatile memory and a non-volatile memory. The memory includes a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes but is not limited to these and any other proper types of memories, for example, at least one magnetic disk storage device, a flash memory device, or another non-volatile solid-state storage device.

The processor 1010 may include one or more processing units. Optionally, the processor 1010 may be integrated with an application processor and a modem processor. The application processor mainly processes operations related to an operating system, a user interface, an application program, or instructions. The modem processor mainly processes a wireless communication signal, for example, a baseband processor. It may be understood that the modem processor may not be integrated into the processor 1010.

The processor 1010 is configured to select a target network as a to-be-accessed network based on a network selection mode, where the target network includes any one of the following: a hosting NPN, a normal NPN, or a public land mobile network PLMN.

In this embodiment of this application, in a case that there are a plurality of types of networks, the terminal can select the target network as the to-be-accessed network based on the network selection mode, where the target network includes any one of the following: the hosting NPN, the normal NPN, or the public land mobile network PLMN, which can effectively perform network selection and improve network selection efficiency, and has relatively low complexity.

Optionally, in a case that the hosting NPN includes a hosting SNPN or the normal NPN includes a normal SNPN, the processor 1010 is specifically configured to:
in a case that the network selection mode is not an SNPN access mode, use the PLMN as the to-be-accessed network; or
in a case that the network selection mode is an SNPN access mode, use the hosting SNPN or the normal SNPN as the to-be-accessed network.

Optionally, the processor 1010 is specifically configured to:
in a case that a network validity condition of the hosting SNPN is met, preferentially use the hosting SNPN as the to-be-accessed network; or
in a case that the network validity condition of the hosting SNPN is not met, preferentially use the normal SNPN as the to-be-accessed network, or use only the normal SNPN as the to-be-accessed network.

Optionally, in a case that the hosting NPN includes a hosting SNPN, the processor 1010 is specifically configured to:
in a case that the network selection mode is any mode, if the hosting SNPN is available, use the hosting SNPN as the to-be-accessed network.

Optionally, the processor 1010 is specifically configured to:
in a case that the network selection mode is an SNPN access mode and a network validity condition of the hosting SNPN is met, preferentially use the hosting SNPN as the to-be-accessed network; or
in a case that the network selection mode is not an SNPN access mode and the network validity condition of the hosting SNPN is met, preferentially use the hosting SNPN as the to-be-accessed network.

Optionally, in a case that the normal NPN includes a normal SNPN, the processor 1010 is further configured to:
in a case that the network selection mode is an SNPN access mode and a network validity condition of the hosting SNPN is not met, preferentially use the normal SNPN as the to-be-accessed network, or use only the normal SNPN as the to-be-accessed network; or
in a case that the network selection mode is not an SNPN access mode and the network validity condition of the hosting SNPN is not met, preferentially use the normal SNPN as the to-be-accessed network, or use only the normal SNPN as the to-be-accessed network.

Optionally, in a case that the hosting NPN includes a hosting SNPN or the normal NPN includes a normal SNPN, the processor 1010 is further configured to:
in a case that a network validity condition of the hosting SNPN is met, enable a target network selection mode.

Optionally, the processor 1010 is specifically configured to perform any one of the following:
using the hosting SNPN as the to-be-accessed network; or
using the hosting SNPN or the normal SNPN as the to-be-accessed network; or
using any one of the hosting SNPN, the normal SNPN, or the PLMN as the to-be-accessed network.

Optionally, the processor 1010 is specifically configured to:
preferentially use the hosting SNPN as the to-be-accessed network.

Optionally, the processor 1010 is specifically configured to:
in the case that the network validity condition of the hosting SNPN is met, preferentially enable the SNPN access mode.

Optionally, that the network validity condition of the hosting SNPN is met includes: a current time is within a time range in which the hosting SNPN is valid, and/or a current location of the terminal is within a location range in which the hosting SNPN is valid.

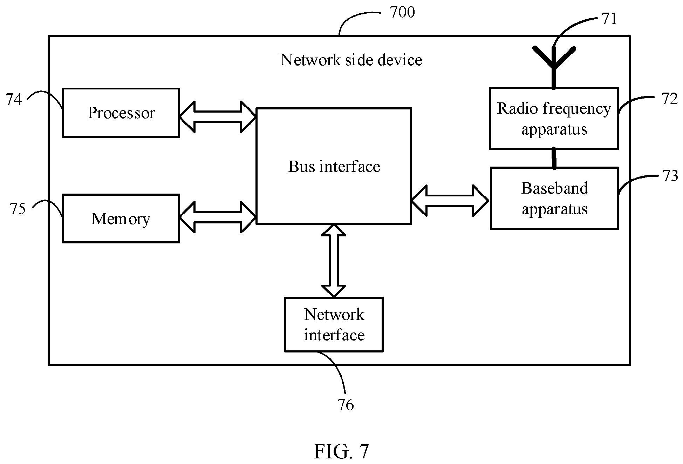

An embodiment of this application further provides a network side device. As shown in FIG. 7, the network side device 700 includes an antenna 71, a radio frequency apparatus 72, a baseband apparatus 73, a processor 75, and a memory 75. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends processed information to the radio frequency apparatus 72. After processing the received information, the radio frequency apparatus 72 sends processed information by using the antenna 71.

The foregoing frequency band processing apparatus may be located in the baseband apparatus 73. The method performed by the network side device in the foregoing embodiments may be implemented in the baseband apparatus 73. The baseband apparatus 73 includes a baseband processor 75 and the memory 75.

For example, the baseband apparatus 73 may include at least one baseband board. A plurality of chips are disposed on the baseband board. As shown in FIG. 7, one of the chips is, for example, the baseband processor 75, and is connected to the memory 75 by using a bus interface, to invoke a program in the memory 75 to perform an operation of a network device shown in the foregoing method embodiment.

The network side device of the baseband apparatus 73 may further include a network interface 76, configured to exchange information with the radio frequency apparatus 72. The interface is, for example, a common public radio interface (common public radio interface, CPRI for short).

Specifically, the network side device 700 in this embodiment of the present invention further includes instructions or a program stored in the memory 75 and executable on the processor 75. The processor 75 invokes the instructions or the program in the memory 75 to perform the method in the foregoing method embodiment, and same technical effects are achieved. To avoid repetition, details are not described herein again.

An embodiment of this application further provides a readable storage medium, where a program or instructions are stored in the readable storage medium, and the program or the instructions are executed by a processor to implement processes in the foregoing network selection method embodiment. In addition, same technical effects can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement processes of the foregoing network selection method embodiment. In addition, same technical effects can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/a program product, where the computer program/the program product is stored in a storage medium, and the computer program/the program product is executed by at least one processor to implement processes of the foregoing network selection method embodiment. In addition, same technical effects can be achieved. To avoid repetition, details are not described herein again.

An embodiment of this application further provides a communication system, including a terminal and a network side device, where the terminal may be configured to perform the steps of the network selection method described above, and the network side device may be a network side device of a to-be-accessed network of the terminal or a network side device of a network in which the terminal is currently located.

It should be noted that in this specification, the term "include", "comprise", or any other variant thereof is intended to cover non-exclusive inclusion, so that a process, method, article, or apparatus that includes a series of elements includes those elements and other elements that are not explicitly listed or elements inherent to the process, method, article, or apparatus. In a case of the absence of more restrictions, the element defined with the statement "includes one..." does not exclude the existence of another identical element in the process, method, article, or apparatus that includes the element. In addition, it should be noted that the scope of the method and apparatus in the implementations of this application is not limited to performing a function in a sequence shown or discussed, and may further include performing a function in a basically simultaneous manner or in a reverse sequence according to a function involved. For example, the described method may be performed in a different order, and various steps may be added, omitted, or combined. In addition, features described with reference to some examples may be combined in other examples.

Based on the description of the foregoing implementations, a person skilled in the art can clearly understand that the method in the foregoing embodiments may be implemented by using software and a necessary general-purpose hardware platform. Certainly, hardware may be used, but the former is a better implementation in many cases. Based on such an understanding, the technical solution of this application essentially, or a part contributing to the prior art, may be embodied in a form of a computer software product. The computer software product is stored in a storage medium (for example, a ROM/RAM, a magnetic disk, or an optical disc), and includes several instructions to enable a terminal (which may be a mobile phone, a computer, a server, an air conditioner, a network device, or the like) to perform the method in the embodiments of this application.

The embodiments of this application are described with reference to the accompanying drawings. However, this application is not limited to the foregoing specific implementations. The foregoing specific implementations are merely examples, rather than restrictive. A person of ordinary skill in the art can make many forms without departing from the objectives and the protection scope of the claims of this application and are within the protection scope of this application.

## Claims

1. A network selection method, comprising:
selecting, by a terminal, a target network as a to-be-accessed network based on a network selection mode, wherein the target network comprises any one of the following: a hosting non-public network NPN, a normal NPN, or a public land mobile network PLMN.

2. The network selection method according to claim 1, wherein in a case that the hosting NPN comprises a hosting SNPN or the normal NPN comprises a normal SNPN, the selecting, by a terminal, a target network as a to-be-accessed network based on a network selection mode comprises:
in a case that the network selection mode is not an SNPN access mode, using, by the terminal, the PLMN as the to-be-accessed network; or
in a case that the network selection mode is an SNPN access mode, using, by the terminal, the hosting SNPN or the normal SNPN as the to-be-accessed network.

3. The network selection method according to claim 2, wherein the using, by the terminal, the hosting SNPN or the normal SNPN as the to-be-accessed network comprises:
in a case that a network validity condition of the hosting SNPN is met, preferentially using, by the terminal, the hosting SNPN as the to-be-accessed network; or
in a case that the network validity condition of the hosting SNPN is not met, preferentially using, by the terminal, the normal SNPN as the to-be-accessed network, or using only the normal SNPN as the to-be-accessed network.

4. The network selection method according to claim 1, wherein in a case that the hosting NPN comprises a hosting SNPN, the selecting, by a terminal, a target network as a to-be-accessed network based on a network selection mode comprises:
in a case that the network selection mode is any mode, if the hosting SNPN is available, using, by the terminal, the hosting SNPN as the to-be-accessed network.

5. The network selection method according to claim 4, wherein the using, by the terminal, the hosting SNPN as the to-be-accessed network comprises:
in a case that the network selection mode is an SNPN access mode and a network validity condition of the hosting SNPN is met, preferentially using, by the terminal, the hosting SNPN as the to-be-accessed network; or
in a case that the network selection mode is not an SNPN access mode and the network validity condition of the hosting SNPN is met, preferentially using, by the terminal, the hosting SNPN as the to-be-accessed network.

6. The network selection method according to claim 4, wherein in a case that the normal NPN comprises a normal SNPN, the method further comprises:
in a case that the network selection mode is an SNPN access mode and a network validity condition of the hosting SNPN is not met, preferentially using, by the terminal, the normal SNPN as the to-be-accessed network, or using only the normal SNPN as the to-be-accessed network; or
in a case that the network selection mode is not an SNPN access mode and the network validity condition of the hosting SNPN is not met, preferentially using, by the terminal, the normal SNPN as the to-be-accessed network, or using only the normal SNPN as the to-be-accessed network.

7. The network selection method according to claim 1, wherein in a case that the hosting NPN comprises a hosting SNPN or the normal NPN comprises a normal SNPN, the method further comprises:
in a case that a network validity condition of the hosting SNPN is met, enabling, by the terminal, a target network selection mode; and
the selecting, by a terminal, a target network as a to-be-accessed network based on a network selection mode comprises any one of the following:
using, by the terminal, the hosting SNPN as the to-be-accessed network; or
using, by the terminal, the hosting SNPN or the normal SNPN as the to-be-accessed network; or
using, by the terminal, any one of the hosting SNPN, the normal SNPN, or the PLMN as the to-be-accessed network.

8. The network selection method according to claim 7, wherein the using, by the terminal, the hosting SNPN or the normal SNPN as the to-be-accessed network comprises:
preferentially using, by the terminal, the hosting SNPN as the to-be-accessed network; and
the using, by the terminal, any one of the hosting SNPN, the normal SNPN, or the PLMN as the to-be-accessed network comprises:
preferentially using, by the terminal, the hosting SNPN as the to-be-accessed network.

9. The network selection method according to any one of claims 1 to 6, wherein
in the case that a network validity condition of a hosting SNPN is met, the terminal preferentially enables the SNPN access mode.

10. The network selection method according to any one of claims 3 or 5 to 8, wherein that the network validity condition of the hosting SNPN is met comprises: a current time is within a time range in which the hosting SNPN network is valid, and/or a current location of the terminal is within a location range in which the hosting SNPN network is valid.

11. A network selection apparatus, comprising:
a processing module, configured to select a target network as a to-be-accessed network based on a network selection mode, wherein the target network comprises any one of the following: a hosting non-public network NPN, a normal NPN, or a public land mobile network PLMN.

12. A terminal, comprising a processor and a memory, wherein the memory stores a program or instructions executable on the processor, and when the program or the instructions are executed by the processor, the steps of the network selection method according to any one of claims 1 to 10 are implemented.

13. A readable storage medium, wherein a program or instructions are stored in the readable storage medium, and when the program or the instructions are executed by a processor, the network selection method according to any one of claims 1 to 10 is implemented.

14. A computer software product, wherein the computer software product is executed by at least one processor to implement the network selection method according to any one of claims 1 to 10.

15. A chip, wherein the chip comprises a processor and a communication interface, the communication interface is coupled to the processor, and the processor is configured to run a program or instructions to implement the network selection method according to any one of claims 1 to 10.
